# EUROPEAN PATENT SPECIFICATION

(11) **EP 3 487 199 B1**
(45) Date of publication and mention of the grant of the patent: **30.12.2020**
(21) Application number: 18206705.8
(22) Date of filing: 16.11.2018
(51) Int. Cl.: H04W 12/04, H04L 9/08, H04L 29/06

(54) **MULTIPLE TRANSCEIVERS FOR WIRELESS KEY UPDATE**
MEHRERE SENDE-EMPFÄNGER ZUR DRAHTLOSEN SCHLÜSSELAKTUALISIERUNG
MULTIPLES ÉMETTEURS-RÉCEPTEURS POUR LA MISE À JOUR DE CLÉ SANS FIL

(30) Priority: 16.11.2017 US 201715814886
(43) Date of publication of application: 22.05.2019
(73) Proprietor: Simmonds Precision Products, Inc., Vergennes, VT 05491 (US)
(72) Inventor: RITTENHOUSE, Garret Edward, Burlington, VT Vermont 05408 (US); ZAKRZEWSKI, Radoslaw, South Burlington, VT Vermont 05403 (US)
(74) Representative: Dehns

(56) References cited:
- EP-A1- 2 731 292
- GB-A- 2 411 086
- US-A1- 2005 282 521
- US-A1- 2006 133 614

## Description

### BACKGROUND

The present invention relates generally to wireless encryption, and in particular to a system and method for wireless encryption key update.

Wireless networks that include nodes, such as sensor networks and actuator networks often encrypt data for wireless communication between the nodes and a data concentrator, for example. In order to ensure that the wireless network remains secure, it is necessary to periodically update encryption keys for all nodes on the wireless network.

The available computing resources in these wireless networks are typically highly asymmetric. For example, a data concentrator or other access point may include a wired connection and be capable of energy-demanding data processing, while the wireless nodes may be battery-powered and configured to conserve energy. Uncertainty in data transmission is also an issue with wireless networks. For example, encryption key updates may fail due to some of the relevant transmission from the data concentrator not being received by the node due to random interference or due to temporary deterioration of radio-frequency (RF) propagation, for example. Thus, it is desirable to implement a system and method that increases the probability that each node on the network is able to receive encryption key updates from the data concentrator, while also requiring minimal data processing at the wireless nodes.

US 2006/133614, US 2005/282521, GB2411086 and EP2731292 relate to establishing secure communication over a wireless network.

### SUMMARY

According to a first aspect of the present invention, there is provided a method of wireless communication as claimed in claim 1.

According to a second aspect of the present invention, there is provided a wireless communication system as claimed in claim 7.

### BRIEF DESCRIPTION OF THE DRAWINGS

FIG. 1A is a block diagram illustrating a wireless communication system that includes a data concentrator having two transceivers.
FIG. 1B is a block diagram illustrating a wireless communication system that includes multiple data concentrators each having a single transceiver.
FIG. 2 is a flowchart illustrating a method of updating keys of wireless nodes using a data concentrator.

### DETAILED DESCRIPTION

A wireless network is disclosed herein that includes a data concentrator having two transceivers for wireless data communication with wireless nodes. At least some data communication in the wireless network is encrypted. The data concentrator may designate one of the transceivers as a primary transceiver and the other as a secondary transceiver. When updating an encryption key, the new key is encrypted in a message using the current key and is sent to the wireless nodes from the data concentrator via the secondary transceiver. Until all of the wireless nodes have successfully updated to the new key, the secondary transceiver continues attempting to decrypt messages from the wireless nodes using the current key.

During and after the key update, the data concentrator communicates with the wireless nodes via the primary transceiver using the new encryption key. Thus, acknowledgements and other messages from the wireless nodes that have been encrypted with the new key may be received and processed through the primary transceiver. This way, the data concentrator knows when each of the wireless nodes have successfully updated to the new key. For any nodes that continue to communicate using the current key, the secondary transceiver may re-send the new key in a message encrypted with the current key. Once the data concentrator has verified that all wireless nodes have successfully updated to the new key, the secondary transceiver may be used for monitoring and support purposes.

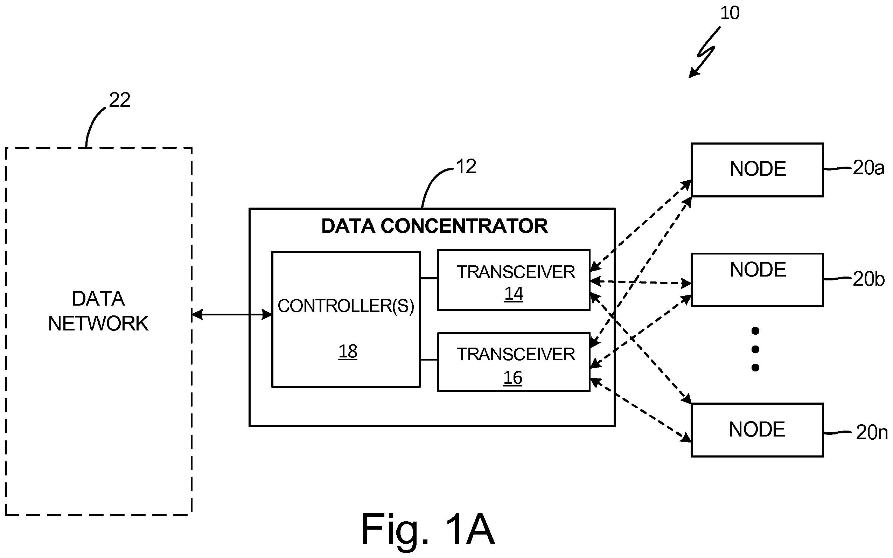

FIG. 1A is a block diagram illustrating wireless communication system 10 that includes data concentrator 12. Data concentrator 12 includes first transceiver 14, second transceiver 16, and controller(s) 18. Data concentrator 12 is configured to communicate wirelessly with nodes 20a-20n using transceivers 14 and 16. Data concentrator 12 is also configured to communicate with data network 22 using wired or wireless communication. Data network 22, for example, may include a wired data communication bus, a wired power bus, or both. In an embodiment, system 10 may be implemented onboard an aircraft. In this embodiment, the wired power bus may be a 28V aircraft power bus that receives power from one or more generators and the wired data communication bus may be an aircraft data bus that allows data concentrator 12 to communicate with other systems, such as other data concentrators, avionics systems, or any other system connected to the data communication bus.

During normal system operation, data concentrator 12 may communicate with wireless nodes 20a-20n using transceiver 14, for example, which may be designated as the primary transceiver. This communication may be encrypted using a current private encryption key. While primary communication is occurring using transceiver 14, transceiver 16, which may be designated as a secondary transceiver, may be providing monitoring and support for data concentrator 12. For example, the secondary transceiver may monitor the power in the communication channel, or act as a secondary communication channel to verify data integrity.

Periodically, data concentrator 12 will want to update the private encryption key utilized for encrypted communication between data concentrator 12 and wireless nodes 20a-20n. Controller(s) 18 may include one or more microcontrollers, microprocessors, application specific integrated circuits (ASICs), field programmable gate arrays (FPGAs), or any other digital or analog circuitry. Controller(s) 18 may include sufficient computing resources to generate encryption keys that are difficult to predict, for example. In other embodiments, a new encryption key may be provided to data concentrator 12 from a key manager or other system on data network 22, for example.

To initiate a key update for wireless nodes 20a-20n, data concentrator 12 may use transceiver 14, since it has already been communicating using the current encryption key. In this embodiment, transceiver 14 transitions to the secondary transceiver role, while transceiver 16 transitions to the primary transceiver role. In other embodiments, transceivers 14 and 16 may remain the primary and secondary transceivers, respectively. Data concentrator 12 encrypts a message that includes the new key using the current encryption key. Transceiver 14 then sends the message to each node 20a-20n to update their respective encryption keys. Transceiver 14 will continue to attempt to decrypt messages from each node 20a-20n using the current encryption key. While communicating the key update using transceiver 14, transceiver 16 may begin communicating with each node 20a-20n using the new encryption key.

Data concentrator 12 may verify key updates for each node 20a-20n, for example, by receiving an acknowledgement from the wireless node 20a-20n, or by receiving any communication from wireless node 20a-20n that is encrypted using the new key. Until it is verified that all wireless nodes 20a-20n have updated to the new key, transceiver 14 continues to receive communications and attempt to decrypt the communications using the current key. For example, if data concentrator 12 receives a message from a wireless node 20a that is successfully decrypted via transceiver 14 using the current key, data concentrator 12 may re-send the new key in a message encrypted with the current key to node 20a using transceiver 14.

Following successful key update for each node 20a-20n, data concentrator 12 may resume normal operation using one transceiver for communication with nodes 20a-20n. For example, because transceiver 16 was communicating using the new key during the key update, transceiver 16 may continue as the primary transceiver during normal system operation. When another new key update is required, transceivers 14 and 16 may assume the same role, or may switch roles. For example, when a new key update is required, since transceiver 16 will be communicating with the current key (previous new key), transceiver 16 may be utilized as the secondary transceiver and communicate key updates to each node 20a-20n while transceiver 14 may become the primary transceiver and communicate using the new key.

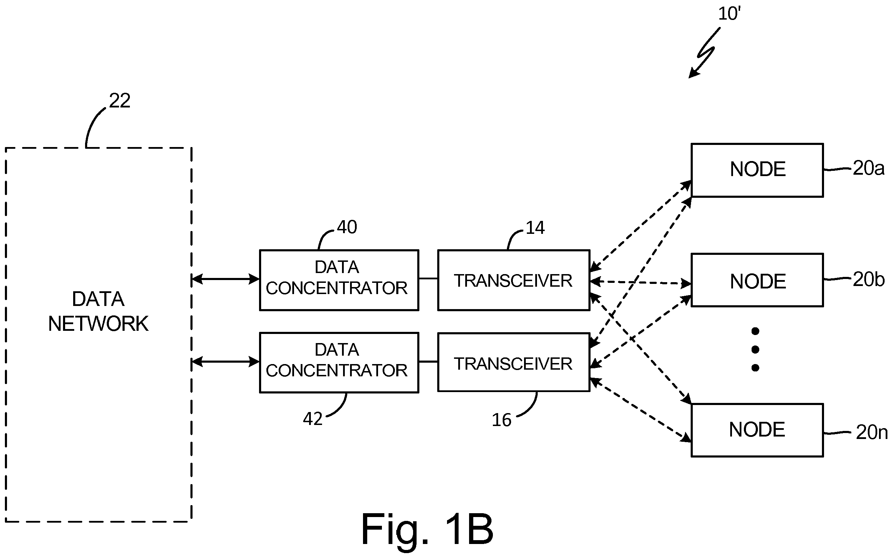

FIG. 1B is a block diagram illustrating wireless communication system 10' that includes two data concentrators 40 and 42. System 10' works in a substantially similar manner to system 10 of FIG. 1A. In system 10', transceiver 14 is included as part of data concentrator 40 while transceiver 16 is included as part of data concentrator 42. In system 10' data concentrators 40 and 42 may be positioned in separate locations. In system 10', one of data concentrators 40 or 42 may be designated as a primary data concentrator and handle generation of new keys, or a new key may be generated by a key manager or other system of data network 22 and provided to data concentrators 40 and 42.

By using two transceivers 14 and 16, systems 10 and 10' are able to handle two common scenarios in which data concentrator 12 receives no response from a wireless node 20a following a key update command. The first scenario being that wireless node 20a never received the key update command from data concentrator 12 due to RF interference or some other reason. In this scenario, the secondary transceiver will receive a subsequent message from wireless node 20a that will still be encrypted using the current key. The secondary transceiver will successfully decrypt that message and know that wireless node 20a has not yet updated to the new key. The secondary transceiver is then able to re-send the new key update command to wireless node 20a. The other scenario is when wireless node 20a has properly received the key update command and updated to the new key, but data concentrator 12 never receives the acknowledgement. In this scenario, wireless node 20a will send subsequent messages encrypted with the new key. The primary transceiver will be able to decrypt these messages using the new key and will know that wireless node 20a successfully updated to the new key even though the original acknowledgement was lost.

Use of two transceivers 14 and 16 to communicate with common nodes 20a-20n may raise some considerations with regard to communication protocols. For example, if transceivers 14 and 16 are using the same radio frequency channel and following a Time Division Multiple Access (TDMA) scheme, then data concentrator 12 must take care to coordinate the time of transmissions from the two transceivers 14 and 16 to ensure that the two transceivers 14 and 16 do not transmit simultaneously so as to avoid collisions.

In another embodiment, a Code Division Multiple Access (CDMA) scheme may be used in which different waveform coding is used by the two transceivers 14 and 16 to communicate with nodes 20a-20n. In the case of CDMA communication, the encryption key update might be used to simultaneously update the code used by nodes 20a-20n to demodulate messages from data concentrator 12. In this embodiment, once a node 20a-20n updates its encryption key and the code used to demodulate received transmissions, it will no longer be able to properly receive messages from the secondary transceiver, which will still be using the old code. This may relax the requirement to synchronize transmissions from the two transceivers 14 and 16.

In yet another embodiment, a Frequency Division Multiple Access (FDMA) scheme may be used, whereby transceivers 14 and 16 operate on different radio frequency channels, thus avoiding interference with each other. In this embodiment, the command to update keys may be simultaneously used to change channels, so that all communications using the primary (new) key occur on one channel, and all communications using the secondary (old) key occur on another channel.

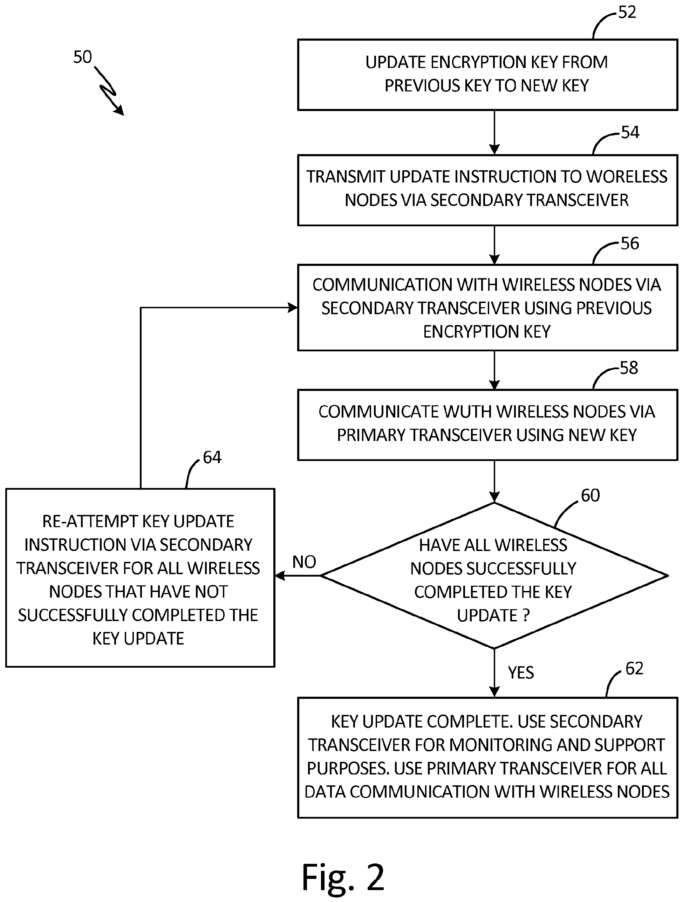

FIG. 2 is a flowchart illustrating method 50 of updating keys of wireless nodes using a data concentrator. The data concentrator may be data concentrator 12 and the wireless nodes may be nodes 20a-20n (FIG. 1A). At step 52, the data concentrator updates the current encryption key to a new encryption key. At step 54, the data concentrator uses its secondary transceiver to instruct each of the wireless nodes to update their respective encryption keys. The instructions sent by the secondary transceiver are encrypted using the current encryption key. At step 56, the secondary transceiver continues to receive and decrypt communications from the wireless nodes using the current encryption key. At step 58, the primary transceiver begins communicating with the wireless nodes using the new encryption key.

The data concentrator verifies successful key update of all wireless nodes. At step 60, it is determined if all wireless nodes have successfully updated their encryption keys. Verification may be accomplished by receiving a communication from each node through the primary transceiver. This communication may be an acknowledgement or any other communication. If the respective wireless node is communicating data that is encrypted using the new key, then that node has successfully updated its encryption key. This way, successful key encryption updates can be verified even if the acknowledgment from the wireless node was lost.

If all nodes have successfully updated their encryption keys, method 50 proceeds to step 62. If there are any nodes that have not successfully updated their encryption keys, the method 50 proceeds to step 64. At step 64, the secondary transceiver re-sends the key update instruction encrypted with the current key to each of the nodes that have not successfully updated to the new key. Method 50 then returns to step 56. At step 62, the key update is complete for all wireless nodes. The secondary transceiver transitions to a support and monitoring function while the primary transceiver is used for all data communication with the wireless nodes.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of wireless communication, the method comprising:
updating (52), at a data concentrator (12), a first encryption key to a second encryption key to encrypt communication between the data concentrator (12) and a plurality of wireless nodes (20a-20n), wherein the data concentrator (12) comprises a first transceiver (14) and a second transceiver (16);
encrypting the second encryption key using the first encryption key;
communicating (54), via the first transceiver (14), the second encryption key to a first wireless node (20a);
decrypting, by the first wireless node (20a), the encrypted second encryption key using the first encryption key;
updating, at the first wireless node (20a), the first encryption key to the second encryption key;
decrypting (56) first data transmissions received from the first wireless node (20a) via the first transceiver (14) using the first encryption key;
decrypting (58) the first data transmissions received from the first wireless node (20a) via the second transceiver (16) using the second encryption key; and
verifying that the first wireless node (20a) updated to the second encryption key based upon successfully decrypting the first data transmissions from the first wireless node (20a) via the second transceiver (16) using the second encryption key.

2. The method of claim 1, further comprising:
updating the second encryption key to a third encryption key;
communicating, via the second transceiver (16), the third encryption key to the first wireless node (20a);
decrypting second data transmissions received from the first wireless node (20a) via the second transceiver (16) using the second encryption key; and
decrypting the second data transmissions received from the first wireless node (20a) via the first transceiver (14) using the third encryption key.

3. The method of claim 1 or 2, further comprising:
updating the second encryption key to a third encryption key;
communicating, via the first transceiver (14), the third encryption key to the first wireless node (20a);
decrypting second data transmissions received from the first wireless node (20a) via the first transceiver (14) using the second encryption key; and decrypting the second data transmissions received from the first wireless node (20a) via the second transceiver (16) using the third encryption key.

4. The method of any preceding claim, further comprising:
communicating, via the first transceiver (14), the second encryption key to a plurality of second wireless nodes (20b-20n);
decrypting third transmissions received from the plurality of second wireless nodes (20b-20n) via the first transceiver (14) using the first encryption key; and
decrypting the third data transmissions received from the plurality of second wireless nodes (20b-20n) via the second transceiver (16) using the second encryption key.

5. The method of claim 4, further comprising:
determining, by the data concentrator (12), that the first (20a) and all of the plurality of second wireless nodes (20b-20n) successfully updated to the second encryption key; and
decrypting fourth data transmissions received via the second transceiver (16) using the second encryption key following determination that the first (20a) and all of the plurality of second wireless nodes (20b-20n) successfully updated to the second encryption key.

6. The method of claim 5, further comprising:
designating the first transceiver (14) as a support and monitoring transceiver following determination that the first (20a) and all of the plurality of second wireless nodes (20b-20n) successfully updated to the second encryption key.

7. A wireless communication system comprising:
a first wireless node (20a); and
a data concentrator (12) configured to provide a new encryption key updated from a current encryption key to the first wireless node (20a), the data concentrator (12) comprising:
a first transceiver (14), wherein the data concentrator (12) is configured to provide a key update message that includes the new encryption key to the first wireless node (20a) via the first transceiver (14), and wherein the key update message is encrypted using the current encryption key; and
a second transceiver (16), wherein the data concentrator (12) is further configured to decrypt first transmissions from the first wireless node (20a) via the second transceiver (16) using the new encryption key, and decrypt the first transmissions via the first transceiver (14) using the current encryption key.

8. The system of claim 7, wherein the data concentrator (12) is further configured to verify that the first wireless node (20a) successfully updated to the new encryption key by successfully decrypting the first transmissions using the new encryption key.

9. The system of claim 7 or 8, wherein the data concentrator (12) is configured to determine that the first wireless node (20a) did not update to the new encryption key by successfully decrypting the first transmissions using the current encryption key.

10. The system of claim 9, wherein the data concentrator (12) is further configured to resend the key update message to the first wireless node (20a) via the first transceiver (14) upon determination that the first wireless node (20a) did not update to the new encryption key.

11. The system of any one of claims 7-10, further comprising:
a plurality of second wireless nodes (20b-20n), wherein the data concentrator (12) is further configured to provide the key update message to each of the plurality of second wireless nodes (20b-20n) via the first transceiver (14).

12. The system of claim 11, wherein the data concentrator (12) is further configured to verify that the first (20a) and all of the plurality of second wireless nodes (20b-20n) have successfully updated to the new key by successfully decrypting first transmissions from each of the first (20a) and the plurality of second wireless nodes (20b-20n) using the new encryption key.

13. The system of claim 12, wherein the first transceiver (14) is used for support and monitoring purposes upon determination that the first (20a) and all of the plurality of second wireless nodes (20b-20n) have updated to the new encryption key.

14. The method of claim 1 comprising:
encrypting a key update command using a current encryption key, which corresponds to the first encryption key, wherein the key update command includes a new encryption key, which corresponds to the second encryption key;
transmitting, via a first transceiver (14) of the data concentrator, the key update command to a plurality of wireless nodes;
decrypting, via the first transceiver (14), messages from the plurality of wireless nodes using the current encryption key; and
decrypting, via a second transceiver (16) of the data concentrator, messages from the plurality of wireless nodes using the new encryption key.
optionally further comprising (i) verifying, for each of the plurality of wireless nodes, successful update to the new encryption key based upon successful decryption of the message using the new encryption key; and/or (ii) determining, for each of the plurality of wireless nodes, if the key update was unsuccessful based upon successful decryption of the messages using the current encryption key; and re-transmitting, via the first transceiver, the key update command to each of the plurality of wireless nodes for which the key update was unsuccessful.

## Patentansprüche

1. Verfahren zur drahtlosen Kommunikation, wobei das Verfahren Folgendes umfasst:
Aktualisieren (52) eines ersten Chiffrierschlüssels auf einen zweiten Chiffrierschlüssel an einem Datenkonzentrator (12), um eine Kommunikation zwischen dem Datenkonzentrator (12) und einer Vielzahl von drahtlosen Knoten (20a-20n) zu chiffrieren, wobei der Datenkonzentrator (12) einen ersten Sende-Empfänger (14) und einen zweiten Sende-Empfänger (16) umfasst;
Chiffrieren des zweiten Chiffrierschlüssels unter Verwendung des ersten Chiffrierschlüssels;
Kommunizieren (54) des zweiten Chiffrierschlüssels über den ersten Sende-Empfänger (14) an einen ersten drahtlosen Knoten (20a);
Dechiffrieren des chiffrierten zweiten Chiffrierschlüssels durch den ersten drahtlosen Knoten (20a) unter Verwendung des ersten Chiffrierschlüssels;
Aktualisieren des ersten Chiffrierschlüssels auf den zweiten Chiffrierschlüssel an dem ersten drahtlosen Knoten (20a);
Dechiffrieren (56) erster Datenübertragungen, die von dem ersten drahtlosen Knoten (20a) über den ersten Sende-Empfänger (14) empfangen werden, unter Verwendung des ersten Chiffrierschlüssels;
Dechiffrieren (58) der ersten Datenübertragungen, die von dem ersten drahtlosen Knoten (20a) über den zweiten Sende-Empfänger (16) empfangen werden, unter Verwendung des zweiten Chiffrierschlüssels; und
Überprüfen, dass der erste drahtlose Knoten (20a) auf den zweiten Chiffrierschlüssel aktualisiert wurde, basierend auf dem erfolgreichen Dechiffrieren der ersten Datenübertragungen von dem ersten drahtlosen Knoten (20a) über den zweiten Sende-Empfänger (16) unter Verwendung des zweiten Chiffrierschlüssels.

2. Verfahren nach Anspruch 1, ferner umfassend:
Aktualisieren des zweiten Chiffrierschlüssels auf einen dritten Chiffrierschlüssel;
Kommunizieren des dritten Chiffrierschlüssels über den zweiten Sende-Empfänger (16) an den ersten drahtlosen Knoten (20a);
Dechiffrieren von zweiten Datenübertragungen, die von dem ersten drahtlosen Knoten (20a) über den zweiten Sende-Empfänger (16) empfangen werden, unter Verwendung des zweiten Chiffrierschlüssels; und
Dechiffrieren der zweiten Datenübertragungen, die von dem ersten drahtlosen Knoten (20a) über den ersten Sende-Empfänger (14) empfangen werden, unter Verwendung des dritten Chiffrierschlüssels.

3. Verfahren nach Anspruch 1 oder 2, ferner umfassend:
Aktualisieren des zweiten Chiffrierschlüssels auf einen dritten Chiffrierschlüssel;
Kommunizieren des dritten Chiffrierschlüssels über den ersten Sende-Empfänger (14) an den ersten drahtlosen Knoten (20a);
Dechiffrieren der zweiten Datenübertragungen, die von dem ersten drahtlosen Knoten (20a) über den ersten Sende-Empfänger (14) empfangen werden, unter Verwendung des zweiten Chiffrierschlüssels; und
Dechiffrieren der zweiten Datenübertragungen, die von dem ersten drahtlosen Knoten (20a) über den zweiten Sende-Empfänger (16) empfangen wird, unter Verwendung des dritten Chiffrierschlüssels.

4. Verfahren nach einem der vorstehenden Ansprüche, ferner umfassend:
Kommunizieren des zweiten Chiffrierschlüssels über den ersten Sende-Empfänger (14) an eine Vielzahl von zweiten drahtlosen Knoten (20b-20n);
Dechiffrieren dritter Übertragungen, die von der Vielzahl zweiter drahtloser Knoten (20b-20n) über den ersten Sende-Empfänger (14) empfangen werden, unter Verwendung des ersten Chiffrierschlüssels; und
Dechiffrieren der dritten Datenübertragungen, die von der Vielzahl von zweiten drahtlosen Knoten (20b-20n) über den zweiten Sende-Empfänger (16) empfangen werden, unter Verwendung des zweiten Chiffrierschlüssels.

5. Verfahren nach Anspruch 4, ferner umfassend:
Feststellen durch den Datenkonzentrator (12), dass sich der erste (20a) und alle aus der Vielzahl von zweiten drahtlosen Knoten (20b-20n) erfolgreich auf den zweiten Chiffrierschlüssel aktualisiert haben; und
Dechiffrieren von vierten Datenübertragungen, die über den zweiten Sende-Empfänger (16) empfangen wurden, unter Verwendung des zweiten Chiffrierschlüssels nach der Feststellung, dass sich der erste (20a) und alle aus der Vielzahl von zweiten drahtlosen Knoten (20b-20n) erfolgreich auf den zweiten Chiffrierschlüssel aktualisiert haben.

6. Verfahren nach Anspruch 5, ferner umfassend:
Kennzeichnen des ersten Sende-Empfängers (14) als einen Unterstützungs- und Überwachungs-Sende-Empfänger nach der Feststellung, dass sich der erste (20a) und alle aus der Vielzahl von zweiten drahtlosen Knoten (20b-20n) erfolgreich auf den zweiten Chiffrierschlüssel aktualisiert haben.

7. Drahtloses Kommunikationssystem, umfassend:
einen ersten drahtlosen Knoten (20a); und
einen Datenkonzentrator (12), der so konfiguriert ist, dass er einen neuen Chiffrierschlüssel, der von einem aktuellen Chiffrierschlüssel aktualisiert wurde, dem ersten drahtlosen Knoten (20a) bereitstellt, wobei der Datenkonzentrator (12) Folgendes umfasst:
einen ersten Sende-Empfänger (14), wobei der Datenkonzentrator (12) so konfiguriert ist, dass er eine Schlüsselaktualisierungsmeldung, die den neuen Chiffrierschlüssel beinhaltet, dem ersten drahtlosen Knoten (20a) über den ersten Sende-Empfänger (14), bereitstellt, und wobei die Schlüsselaktualisierungsmeldung unter Verwendung des aktuellen Chiffrierschlüssels chiffriert ist; und
einen zweiten Sende-Empfänger (16), wobei der Datenkonzentrator (12) ferner so konfiguriert ist, dass er erste Übertragungen von dem ersten drahtlosen Knoten (20a) über den zweiten Sende-Empfänger (16) unter Verwendung des neuen Chiffrierschlüssels dechiffriert und die ersten Übertragungen über den ersten Sende-Empfänger (14) unter Verwendung des aktuellen Chiffrierschlüssels dechiffriert.

8. System nach Anspruch 7, wobei der Datenkonzentrator (12) ferner so konfiguriert ist, dass er überprüft, dass sich der erste drahtlose Knoten (20a) erfolgreich auf den neuen Chiffrierschlüssel aktualisiert hat, indem er erfolgreich die ersten Übertragungen unter Verwendung des neuen Chiffrierschlüssels dechiffriert.

9. System nach Anspruch 7 oder 8, wobei der Datenkonzentrator (12) so konfiguriert ist, dass er feststellt, dass der erste drahtlose Knoten (20a) sich nicht auf den neuen Chiffrierschlüssel aktualisiert hat, indem er erfolgreich die ersten Übertragungen unter Verwendung des aktuellen Chiffrierschlüssels dechiffriert.

10. System nach Anspruch 9, wobei der Datenkonzentrator (12) ferner so konfiguriert ist, dass er die Schlüsselaktualisierungsmeldung an den ersten drahtlosen Knoten (20a) über den ersten Sende-Empfänger (14) nach der Feststellung, dass sich der erste drahtlose Knoten (20a) nicht auf den neuen Chiffrierschlüssel aktualisiert hat, erneut sendet.

11. System nach einem der Ansprüche 7-10, ferner umfassend:
eine Vielzahl von zweiten drahtlosen Knoten (20b-20n), wobei der Datenkonzentrator (12) ferner so konfiguriert ist, dass er die Schlüsselaktualisierungsmeldung jedem aus der Vielzahl von zweiten drahtlosen Knoten (20b-20n) über den ersten Sende-Empfänger (14) bereitstellt.

12. System nach Anspruch 11, wobei der Datenkonzentrator (12) ferner so konfiguriert ist, dass er überprüft, dass sich der erste (20a) und alle aus der Vielzahl von zweiten drahtlosen Knoten (20b-20n) erfolgreich auf den neuen Schlüssel aktualisiert haben, indem sie erfolgreich erste Übertragungen von jedem aus dem ersten (20a) und der Vielzahl von zweiten drahtlosen Knoten (20b-20n) unter Verwendung des neuen Chiffrierschlüssels dechiffrieren.

13. System nach Anspruch 12, wobei der erste Sende-Empfänger (14) für Unterstützungs- und Überwachungszwecke nach der Feststellung, dass sich der erste (20a) und alle aus der Vielzahl von zweiten drahtlosen Knoten (20b-20n) auf den neuen Chiffrierschlüssel aktualisiert haben, verwendet wird.

14. Verfahren nach Anspruch 1, umfassend:
Chiffrieren eines Schlüsselaktualisierungsbefehls unter Verwendung eines aktuellen Chiffrierschlüssels, der dem ersten Chiffrierschlüssel entspricht, wobei der Schlüsselaktualisierungsbefehls einen neuen Chiffrierschlüssel beinhaltet, der dem zweiten Chiffrierschlüssel entspricht;
Übertragen des Schlüsselaktualisierungsbefehls über einen ersten Sende-Empfänger (14) des Datenkonzentrators an eine Vielzahl von drahtlosen Knoten;
Dechiffrieren von Meldungen von der Vielzahl von drahtlosen Knoten über den ersten Sende-Empfänger (14) unter Verwendung des aktuellen Chiffrierschlüssels; und Dechiffrieren von Meldungen von der Vielzahl von drahtlosen Knoten über einen zweiten Sende-Empfänger (16) des Datenkonzentrators unter Verwendung des neuen Chiffrierschlüssels.
optional ferner umfassend das (i) Überprüfen der erfolgreichen Aktualisierung auf den neuen Chiffrierschlüssel für jeden aus der Vielzahl von drahtlosen Knoten basierend auf dem erfolgreichen Dechiffrieren der Meldung unter Verwendung des neuen Chiffrierschlüssels; und/oder (ii) Feststellen für jeden aus der Vielzahl von drahtlosen Knoten, ob die Schlüsselaktualisierung erfolgreich war, basierend auf dem erfolgreichen Dechiffrieren der Meldungen unter Verwendung des aktuellen Chiffrierschlüssels; und das erneute Übermitteln des Schlüsselaktualisierungsbefehls über den ersten Sende-Empfänger an jeden aus der Vielzahl von drahtlosen Knoten, bei denen die Schlüsselaktualisierung nicht erfolgreich war.

## Revendications

1. Procédé de communication sans fil, le procédé comprenant :
la mise à jour (52), au niveau d'un concentrateur de données (12), d'une première clé de chiffrement pour donner une deuxième clé de chiffrement afin de chiffrer la communication entre le concentrateur de données (12) et une pluralité de nœuds sans fil (20a-20n), dans lequel le concentrateur de données (12) comprend un premier émetteur-récepteur (14) et un second émetteur-récepteur (16) ;
le chiffrement de la deuxième clé de chiffrement à l'aide de la première clé de chiffrement ;
la communication (54), par le biais du premier émetteur-récepteur (14), de la deuxième clé de chiffrement à un premier nœud sans fil (20a) ;
le déchiffrement, par le premier nœud sans fil (20a), de la deuxième clé de chiffrement chiffrée à l'aide de la première clé de chiffrement ;
la mise à jour, au niveau du premier nœud sans fil (20a), de la première clé de chiffrement pour donner la deuxième clé de chiffrement ;
le déchiffrement (56) des premières transmissions de données reçues en provenance du premier nœud sans fil (20a) par l'intermédiaire du premier émetteur-récepteur (14) à l'aide de la première clé de chiffrement ;
le déchiffrement (58) des premières transmissions de données reçues en provenance du premier nœud sans fil (20a) par l'intermédiaire du second émetteur-récepteur (16) à l'aide de la deuxième clé de chiffrement ; et
la vérification que le premier nœud sans fil (20a) est mis à jour vers la deuxième clé de chiffrement sur la base du déchiffrement réussi des premières transmissions de données en provenance du premier nœud sans fil (20a) par l'intermédiaire du second émetteur-récepteur (16) à l'aide de la deuxième clé de chiffrement.

2. Procédé selon la revendication 1, comprenant en outre :
la mise à jour de la deuxième clé de chiffrement pour donner une troisième clé de chiffrement ;
la communication, par l'intermédiaire du second émetteur-récepteur (16), de la troisième clé de chiffrement au premier nœud sans fil (20a) ;
le déchiffrement des deuxièmes transmissions de données reçues en provenance du premier nœud sans fil (20a) par le biais du second émetteur-récepteur (16) à l'aide de la deuxième clé de chiffrement ; et
le déchiffrement des deuxièmes transmissions de données reçues en provenance du premier nœud sans fil (20a) par l'intermédiaire du premier émetteur-récepteur (14) à l'aide de la troisième clé de chiffrement.

3. Procédé selon la revendication 1 ou 2, comprenant en outre :
la mise à jour de la deuxième clé de chiffrement pour donner une troisième clé de chiffrement ;
la communication, par l'intermédiaire du premier émetteur-récepteur (14), de la troisième clé de chiffrement au premier nœud sans fil (20a) ;
le déchiffrement des deuxièmes transmissions de données reçues en provenance du premier nœud sans fil (20a) par l'intermédiaire du premier émetteur-récepteur (14) à l'aide de la deuxième clé de chiffrement ; et
le déchiffrement des deuxièmes transmissions de données reçues en provenance du premier nœud sans fil (20a) par l'intermédiaire du second émetteur-récepteur (16) à l'aide de la troisième clé de chiffrement.

4. Procédé selon une quelconque revendication précédente, comprenant en outre :
la communication, par l'intermédiaire du premier émetteur-récepteur (14), de la deuxième clé de chiffrement à une pluralité de seconds nœuds sans fil (20b-20n) ;
le déchiffrement des troisièmes transmissions reçues en provenance de la pluralité de seconds nœuds sans fil (20b-20n) par l'intermédiaire du premier émetteur-récepteur (14) à l'aide de la première clé de chiffrement ; et
le déchiffrement des troisièmes transmissions de données reçues en provenance de la pluralité de seconds nœuds sans fil (20b-20n) par l'intermédiaire du second émetteur-récepteur (16) à l'aide de la deuxième clé de chiffrement.

5. Procédé selon la revendication 4, comprenant en outre :
la détermination, par le concentrateur de données (12), selon laquelle le premier (20a) et l'ensemble de la pluralité de seconds nœuds sans fil (20b-20n) ont été mis à jour avec succès vers la deuxième clé de chiffrement ; et
le déchiffrement des quatrièmes transmissions de données reçues par l'intermédiaire du second émetteur-récepteur (16) à l'aide de la deuxième clé de chiffrement après la détermination selon laquelle le premier (20a) et l'ensemble de la pluralité de seconds nœuds sans fil (20b-20n) ont été mis à jour avec succès vers la deuxième clé de chiffrement.

6. Procédé selon la revendication 5, comprenant en outre :
la désignation du premier émetteur-récepteur (14) comme émetteur-récepteur de support et de surveillance après la détermination selon laquelle le premier (20a) et l'ensemble de la pluralité de seconds nœuds sans fil (20b-20n) ont été mis à jour avec succès vers la deuxième clé de chiffrement.

7. Système de communication sans fil comprenant :
un premier nœud sans fil (20a) ; et
un concentrateur de données (12) conçu pour fournir une nouvelle clé de chiffrement mise à jour à partir d'une clé de chiffrement actuelle au premier nœud sans fil (20a), le concentrateur de données (12) comprenant :
un premier émetteur-récepteur (14), dans lequel le concentrateur de données (12) est conçu pour fournir un message de mise à jour de clé qui comporte la nouvelle clé de chiffrement au premier nœud sans fil (20a) par l'intermédiaire du premier émetteur-récepteur (14), et dans lequel le message de mise à jour de clé est chiffré à l'aide de la clé de chiffrement actuelle ; et
un second émetteur-récepteur (16), dans lequel le concentrateur de données (12) est en outre conçu pour déchiffrer les premières transmissions en provenance du premier nœud sans fil (20a) par l'intermédiaire du second émetteur-récepteur (16) à l'aide de la nouvelle clé de chiffrement, et déchiffrer les premières transmissions par l'intermédiaire du premier émetteur-récepteur (14) à l'aide de la clé de chiffrement actuelle.

8. Système selon la revendication 7, dans lequel le concentrateur de données (12) est en outre conçu pour vérifier que le premier nœud sans fil (20a) a été mis à jour avec succès vers la nouvelle clé de chiffrement par le déchiffrement avec succès des premières transmissions à l'aide de la nouvelle clé de chiffrement.

9. Système selon la revendication 7 ou 8, dans lequel le concentrateur de données (12) est conçu pour déterminer que le premier nœud sans fil (20a) n'a pas été mis à jour vers la nouvelle clé de chiffrement par le déchiffrement avec succès des premières transmissions à l'aide de la clé de chiffrement actuelle.

10. Système selon la revendication 9, dans lequel le concentrateur de données (12) est en outre conçu pour renvoyer le message de mise à jour de clé au premier nœud sans fil (20a) par l'intermédiaire du premier émetteur-récepteur (14) lorsqu'il est déterminé que le premier nœud sans fil (20a) n'a pas été mis à jour vers la nouvelle clé de chiffrement.

11. Système selon l'une quelconque des revendications 7 à 10, comprenant en outre :
une pluralité de seconds nœuds sans fil (20b-20n), dans lequel le concentrateur de données (12) est en outre conçu pour fournir le message de mise à jour de clé à chacun de la pluralité de seconds nœuds sans fil (20b-20n) par l'intermédiaire du premier émetteur-récepteur (14).

12. Système selon la revendication 11, dans lequel le concentrateur de données (12) est en outre conçu pour vérifier que le premier (20a) et l'ensemble de la pluralité de seconds nœuds sans fil (20b-20n) ont été mis à jour avec succès vers la nouvelle clé par le déchiffrement avec succès des premières transmissions en provenance de chacun du premier (20a) et de la pluralité de seconds nœuds sans fil (20b-20n) à l'aide de la nouvelle clé de chiffrement.

13. Système selon la revendication 12, dans lequel le premier émetteur-récepteur (14) est utilisé à des fins de support et de surveillance lorsqu'il est déterminé que le premier (20a) et l'ensemble de la pluralité de seconds nœuds sans fil (20b-20n) ont été mis à jour vers la nouvelle clé de chiffrement.

14. Procédé selon la revendication 1, comprenant :
le chiffrement d'une commande de mise à jour de clé à l'aide d'une clé de chiffrement actuelle, qui correspond à la première clé de chiffrement, dans lequel la commande de mise à jour de clé comporte une nouvelle clé de chiffrement, qui correspond à la deuxième clé de chiffrement ;
la transmission, par l'intermédiaire d'un premier émetteur-récepteur (14) du concentrateur de données, de la commande de mise à jour de clé à une pluralité de nœuds sans fil ;
le déchiffrement, par l'intermédiaire du premier émetteur-récepteur (14), de messages de la pluralité de nœuds sans fil à l'aide de la clé de chiffrement actuelle ; et
le déchiffrement, par l'intermédiaire d'un second émetteur-récepteur (16) du concentrateur de données, de messages de la pluralité de nœuds sans fil à l'aide de la nouvelle clé de chiffrement.
comprenant en outre éventuellement (i) la vérification, pour chacun de la pluralité de nœuds sans fil, de la mise à jour réussie vers la nouvelle clé de chiffrement sur la base du déchiffrement réussi du message à l'aide de la nouvelle clé de chiffrement ; et/ou (ii) le fait de déterminer, pour chacun de la pluralité de nœuds sans fil, si la mise à jour de clé a échoué sur la base du déchiffrement réussi des messages à l'aide de la clé de chiffrement actuelle ; et la retransmission, par l'intermédiaire du premier émetteur-récepteur, de la commande de mise à jour de clé à chacun de la pluralité de nœuds sans fil pour lesquels la mise à jour de clé a échoué.
